(19) Europäisches Patentamt
European Patent Office
Office européen des brevets

(11) EP 4 019 582 B1

(12) **EUROPEAN PATENT SPECIFICATION**

(45) Date of publication and mention of the grant of the patent:
**30.07.2025 Bulletin 2025/31**

(21) Application number: **20216930.6**

(22) Date of filing: **23.12.2020**

(51) International Patent Classification (IPC):
***C08L 23/08*** *(2025.01)* ***C09D 1/00*** *(2006.01)*

(52) Cooperative Patent Classification (CPC):
(C-Sets available)
**C08L 23/0815;** C08L 2207/066 (Cont.)

(54) **POLYETHYLENE FILM**

POLYETHYLENFILM

FILM DE POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2022 Bulletin 2022/26**

(73) Proprietor: **Borealis GmbH**
**1020 Vienna (AT)**

(72) Inventors:
- **WANG, Jingbo**
  **4021 Linz (AT)**
- **BERNREITNER, Klaus**
  **4021 Linz (AT)**
- **VAHTERI, Markku**
  **06101 Porvoo (FI)**
- **BERGER, Friedrich**
  **4021 Linz (AT)**

(74) Representative: **Dehns**
**10 Old Bailey**
**London EC4M 7NG (GB)**

(56) References cited:
**EP-A1- 2 996 875**
**WO-A1-2007/129078**
**US-B1- 6 534 173**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 33/10;**
C08L 2207/066, C08L 33/10

## Description

This invention relates to a polyethylene film which is processable and has good optical properties, good sealing properties and good mechanical properties. In particular, the invention relates to a film comprising a single site produced LLDPE copolymer and an ethylene alkyl (meth)acrylate as well as a process for the preparation of such a film.

## Background of invention

Polyethylenes, and especially linear low density polyethylenes (LLDPE), are widely used in daily life. These materials have particular utility in packaging due to their low cost and high performance. The use of single site LLDPEs in film applications is often considered beneficial, as these materials tend to offer improved mechanical properties over LLDPE produced using a Ziegler Natta catalyst. One of the drawbacks of this type of material is its processability however. Single site produced LLDPEs often have narrow molecular weight distribution and hence are more challenging to extrude and film blow.

A known solution to that problem is to blend low density polyethylene (LDPE) with the LLDPE to improve the stability of the bubble during film blowing. This combination also offers improved optical properties. However, the introduction of LDPE reduces the mechanical performance of the film and its sealing properties. The present inventors sought a solution to this problem, which provides an ideal balance of good processability and good optics without a reduction in mechanical performance and sealing properties.

The present inventors have established that a film comprising the combination of a single site produced LLDPE and an ethylene alkyl (meth)acrylate offers a solution to this problem. These two materials have previous been combined in various fields.

JP 2012023155A discloses the combination of LLDPE and ethylene ethyl acrylate in the field of solar cells.

WO2001/019912 discloses a blend of plastomer type polyethylene and EEA in the context of flooring and dent resistance.

US6509090 and US 6 534 173 B1 concern a cling film comprising a plastomer type polyethylene and ethylene alkyl (meth)acrylate.

Films comprising a combination of a single site produced LLDPE copolymer as defined herein with an ethylene alkyl (meth)acrylate offer a preferred solution with an ideal balance of optical, mechanical and sealing properties which combination is readily processable.

## Summary of Invention

Viewed from one aspect the invention provides a film comprising

(i) at least 70 wt% of a single site produced linear low density polyethylene (LLDPE) copolymer having an $MFR_2$ of 0.3 to 5.0 g/10min and a density of 905 to 945 kg/$m^3$; and
(ii) 1.0 to 30 wt% of an ethylene alkyl (meth)acrylate copolymer having an alkyl (meth)acrylate content of 1.0 to 30 wt%.

Viewed from another aspect the invention provides a multilayer film comprising at least two layers wherein at least one layer comprises

(i) at least 70 wt% of a single site produced linear low density polyethylene (LLDPE) copolymer having an $MFR_2$ of 0.3 to 5.0 g/10min and a density of 905 to 945 kg/$m^3$; and
(ii) 1.0 to 30 wt% of an ethylene alkyl (meth)acrylate copolymer having an alkyl (meth)acrylate content of 1.0 to 30 wt%.

Viewed from another aspect the invention provides a process for the production of a film comprising (a) combining

(i) a single site produced linear low density polyethylene (LLDPE) copolymer having an $MFR_2$ of 0.3 to 5.0 g/10min and a density of 905 to 945 kg/$m^3$; and
(ii) an ethylene alkyl (meth)acrylate copolymer having an alkyl (meth)acrylate content of 1.0 to 30 wt% to form a mixture comprising at least 70 wt% of said a single site produced linear low density polyethylene (LLDPE) copolymer and 1.0 to 30 wt% of said ethylene alkyl (meth)acrylate copolymer;

(b) extruding and blowing or casting said mixture to form a film or one layer of a multilayer film.

Viewed from another aspect the invention provides the use of a film as hereinbefore defined in packaging, such as food packaging.

The weight percentages above are based on the total weight of the film or film layer respectively.

## Definitions

The term ethylene alkyl (meth)acrylate is a copolymer of ethylene and an alkyl methacrylate or alkyl acrylate.

## Detailed Description of the Invention

This invention relates to a film or a film layer in a film comprising a LLDPE copolymer and an ethylene alkyl (meth) acrylate copolymer. This combination of components has been found to surprisingly lead to an excellent balance of processability, optical properties, mechanical properties and sealing properties.

## Single site produced linear low density polyethylene (LLDPE) copolymer - component (i)

The LLDPE copolymer used in the invention is one that is manufactured using a single site catalyst. Alternatively viewed the LLDPE copolymer of use in the invention is one that comprises residues of Hf or Zr which derive from the catalyst used to prepare it.

The LLDPE copolymer used in the films of the present invention is a LLDPE copolymer having a density of 905 to 945 kg/m$^3$. Typically, the density is in the range of 910 to 940 kg/m$^3$, especially as 912 to 930 kg/m$^3$. A highly preferred density range is 915 to 925 kg/m$^3$.

The melt flow rate (2.16 kg, 190°C) ($MFR_2$) of the LLDPE copolymer is in the range of 0.3 to 5.0 g /10min, preferably from 0.5 to 5.0 g/10 min, more preferably from 0.75 to 3.0 g/10 min. The use of a LLDPE copolymer having a density of 912 to 930 kg/m$^3$ and a $MFR_2$ of 0.75 to 3.0 g/10 min is especially preferred.

The LLDPE copolymer is preferably a copolymer of ethylene with one or more alpha-olefin comonomers having from 3 to 10 carbon atoms. Ideally, the comonomer(s) present are selected from the group consisting of is 1-butene, 1-hexene or 1-octene.

The LLDPE copolymer may contain from 0.1 to 10% by mole of comonomer(s), e.g. from 0.1 to 5% by mole of comonomer(s). For example, the LLDPE copolymer may contain from 90 to 99.9 % by mole, preferably from 92 to 99.5 % by mole, of units derived from ethylene and from 0.5 to 8 % by mole of units derived from the comonomer(s), the comonomer(s) preferably being one or more alpha-olefins having from 3 to 10 carbon atoms.

The LLDPE copolymer of use in the invention is preferably multimodal, such as bimodal. By multimodal LLDPE copolymer is meant a copolymer which contains at least two distinct components having different average molecular weights, different contents of comonomer or both. Ideally, the GPC curve of such a material will show two distinct peaks. Multimodal LLDPE copolymers are well known and are widely described in the literature.

It is preferred that the LLDPE copolymer used has a molecular weight distribution (Mw/Mn) in the range of 4 to 20, more preferably in the range of from 4 to 15, most preferably in the range of from 4 to 10.

The LLDPE copolymer preferably has a melting point of 112 to 130°C, more preferably of 115 to 128°C and even more preferably of 118 to 126°C.

The amount of component (i) in any film, film layer or blend of the invention is at least 70 wt%, such as at least 75 wt%, especially at least 80 wt%, such as 85 to 95 wt%. These percentages are based on the total weight of the film, film layer or blend of the invention.

In one embodiment, the LLDPE copolymer is a multimodal LLDPE terpolymer of ethylene and at least two alpha-olefin comonomers having from 3 to 10 carbon atoms. The term terpolymer is used herein to define a LLDPE polymer with at least two comonomers.

Ideally, the multimodal LLDPE terpolymer comprises a first copolymer component of ethylene and an alpha-olefin comonomer having from 4 to 10 carbon atoms and a second copolymer component of ethylene and an alpha-olefin comonomer having from 6 to 10 carbon atoms. These components are obviously different. Preferably, the multimodal LLDPE terpolymer is a copolymer of ethylene and at least two comonomers selected from 1-butene, 1-hexene, and 1-octene. Ideally, the comonomers used in the two components are different.

It is further preferred that the multimodal LLDPE terpolymer is a terpolymer of ethylene and exactly two comonomers preferably selected from 1-butene, 1-hexene, or 1-octene. Especially preferred is a multimodal LLDPE terpolymer comprising

- a first copolymer component comprising ethylene and 1-butene, and
- a second copolymer component comprising ethylene and 1-hexene.

Even more preferred is a multimodal LLDPE terpolymer comprising

- a first copolymer component consisting of ethylene and 1-butene and

- a second copolymer component consisting of ethylene and 1-hexene.

The multimodal LLDPE terpolymer of the present invention is preferably produced by copolymerizing ethylene and at least two comonomers in two or more polymerization stages where the polymerization conditions are sufficiently different to allow production of different polymers in different stages. Such polymers are described in, *inter alia,* WO2016/198273. Full details of how to prepare suitable multimodal LLDPE terpolymers can be found in this reference.

A preferred multimodal LLDPE terpolymer comprises a first copolymer component and a second copolymer component.

## First copolymer component

The first copolymer component preferably comprises ethylene and a first alpha-olefin comonomer having 4 to 10 carbon atoms, such as 1-butene, 1-hexene or 1-octene, more preferably 1-butene. In a preferred embodiment, the first copolymer component consists of ethylene and 1-butene.

The first copolymer component may have a $MFR_2$ of 1.0 to 20 g/10min. Furthermore, the first copolymer component may have a density of from 925 to 955 kg/m$^3$, preferably 930 to 955 kg/m$^3$, especially 935 to 955 kg/m$^3$, most especially from 935 to 945 kg/m$^3$.

The first copolymer component is ideally produced in a first polymerization stage, which is preferably a slurry polymerization. Hydrogen can be introduced into the first polymerization stage for controlling the $MFR_2$ of the first copolymer component.

The first alpha-olefin comonomer is introduced into the first polymerization stage for controlling the density of the first copolymer component. As discussed above, the comonomer is an alpha-olefin having from 4 to 10 carbon atoms, preferably 1-butene, 1-hexene or 1-octene, more preferably 1-butene.

In a most preferred embodiment, the multimodal LLDPE terpolymer comprises a first and a second copolymer component, wherein the first copolymer component comprises at least a first and a second fraction.

These two or more fractions of the first copolymer component may be unimodal in view of their molecular weight or they can be bimodal in respect of their molecular weight.

It is preferred that the two or more fractions of the first copolymer component are unimodal in view of their molecular weight.

It is within the scope of the invention, that the first and the second fraction of the first copolymer component are present in a weight ratio of 4:1 up to 1:4, such as 3:1 to 1:3, or 2:1 to 1:2, or 1:1.

Each fraction of the first copolymer component is a polyethylene copolymer with one or more alpha-olefins having from 4 to 10 carbon atoms, preferably 1-butene, 1-hexene or 1-octene, more preferably 1-butene. Ideally, each fraction contains a single comonomer. Ideally, each fraction is an ethylene 1-butene copolymer.

It is further preferred, that the two or more fractions of the first copolymer component are produced in two or more consecutive reactors. Ideally, the fractions are produced in two consecutive slurry reactors such as loop reactors.

For a person skilled in the art it will be clear that when producing the first and the second fraction of the first copolymer component in two consecutive reactors, there has to be a certain difference in the $MFR_2$-values and/or density-values of each fraction to ensure that these can be distinguished. These must be different.

It is hence understood within the meaning of the invention, that $MFR_2$ after loop1 is preferably higher than the $MFR_2$ after loop2 of the first copolymer component. Further, the $MFR_2$ after loop2 can be at least 5% lower than the $MFR_2$ after loop1. Ideally, the density after loop2 is lower than that after loop1, e.g. at least 0.5 kg/m$^3$ lower. Alternatively viewed therefore the $MFR_2$ of the first and second fractions differs by at least 0.5 g/10min. Alternatively viewed therefore the density of the first and second fractions differs by at least 0.5 kg/m$^3$.

## Second copolymer component

The second copolymer component comprises ethylene and a second alpha-olefin comonomer having 6 to 10 carbon atoms, such as 1-hexene or 1-octene, more preferably 1-hexene. It is further preferred that the second alpha-olefin comonomer has more carbon atoms than the first alpha-olefin monomer, i.e. the comonomer in the second copolymer component is higher than the comonomer in the first copolymer component, e.g. 1-hexene vs 1-butene.

It is further preferred that the second alpha-olefin comonomer has 2 more carbon atoms than the first alpha-olefin monomer. In a preferred embodiment the second copolymer consists of ethylene and 1-hexene.

The second copolymer component is produced in the presence of any previously produced polymer component. Ideally, it is produced in a gas phase reactor, e.g. as discussed in WO2016/198273.

The ratio (i.e. the split) between the first and the second copolymer within the multimodal LLDPE terpolymer of ethylene and at least two alpha-olefin-comonomers has significant effect on the mechanical properties of the final composition.

It is hence envisaged within the scope of the invention that the second copolymer component forms a significant part of the polymer components present in the multimodal LLDPE terpolymer, i.e. at least 50 wt% of the multimodal LLDPE terpolymer, preferably 53 wt% or more, such as 55 wt% or more.

More preferably the second copolymer component may form up to 65 wt% of the multimodal LLDPE terpolymer.

Consecutively the first copolymer component forms at most 50 wt% or less of the multimodal LLDPE terpolymer, preferably 47 wt% or less, such as 45 wt% or less. More preferably the first copolymer component may form 35 wt% or more of the multimodal LLDPE terpolymer.

The second copolymer ideally represents a higher molecular weight component whereas the first copolymer ideally represents a lower molecular weight component. The MFR of the second copolymer is preferably lower therefore than that of the first copolymer.

The multimodal LLDPE terpolymer is preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization lies within 1 to 5 wt% in respect to the final multimodal LLDPE terpolymer. This can counted as part of the first copolymer component.

## Catalyst

The LLDPE copolymer is one made using a single site catalyst, such as a metallocene catalyst. A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

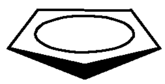

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

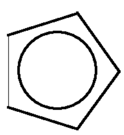

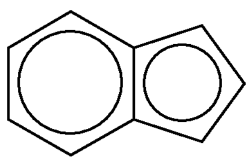

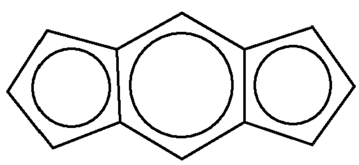

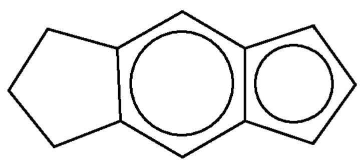

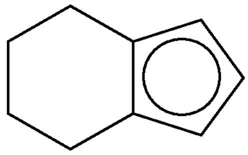

which can obviously be substituted. The metallocene complex preferably does not comprise a single cyclopentadienyl type ligand. Preferably, two such cyclopentadienyl type ligands are present, ideally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

R is a bridge of 1-7 atoms, e.g. 1 to 2 atoms;

X is a sigma ligand;

n is 0 or 1;
M is a transition metal of Group 4, e.g. Ti, Zr or Hf, especially Zr or Hf.
In a preferred embodiment the metallocene complex is a compound of formula (II)

$$(Cp)_2R_nMX_2 \qquad (II)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, $-SiR''_3$, $-OSiR''_3$, -SR", $-PR''_2$, OR" or $-NR''_2$,

each R" is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of $-NR''_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. $-SiR^1_2-$, wherein each $R^1$ is independently C1-C20-alkyl, C3-12cycloalkyl, C6-C20-aryl or tri(C1-C20-alkyl)silyl- residue, such as trimethylsilyl;

M is a transition metal of Group 4, e.g. Ti, Zr or Hf, especially Zr or Hf;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", $-PR''_3$, $-SiR''_3$, $-OSiR''_3$, $-NR''_2$ or $-CH_2$-Y, wherein Y is C6-C20-aryl, C6-C20-heteroaryl, C1-C20-alkoxy, C6-C20-aryloxy,

$NR''_2$, -SR", $-PR''_3$, $-SiR''_3$, or $-OSiR''_3$;

each of the above mentioned ring moieties alone or as a part of another moiety as the substituent for Cp, X, R" or $R^1$ can further be substituted e.g. with C1-C20-alkyl which may contain Si and/or O atoms;

n is 0 or 1.

Suitably, in each X as $-CH_2$-Y, each Y is independently selected from C6-C20-aryl, $NR''_2$, $-SiR''_3$ or $-OSiR''_3$. Most preferably, X as $-CH_2$-Y is benzyl. Each X other than $-CH_2$-Y is independently halogen, C1-C20-alkyl, C1-C20-alkoxy, C6-C20-aryl, C7-C20-arylalkenyl or $-NR''_2$ as defined above, e.g. $-N(C1\text{-}C20\text{-alkyl})_2$.

Preferably, each X is halogen, methyl, phenyl or $-CH_2$-Y, and each Y is independently as defined above.

Cp is preferably cyclopentadienyl, indenyl, tetrahydroindenyl or fluorenyl, optionally substituted as defined above.

Ideally Cp is a cyclopentadienyl or indenyl. In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), $-OSiR''_3$, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si=, (methyylcyclohexyl)silyl= or (trimethylsilylmethyl)Si=; n is 0 or 1. Preferably, R" is other than hydrogen.

A specific subgroup includes the well-known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a $-NR''_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

To form a catalyst, a cocatalyst is used as is well known in the art. Cocatalysts comprising Al or B are well known and can be used here. The use of aluminoxanes (e.g. MAO) or boron based cocatalysts (such as borates) is preferred.

LLDPE copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

**Ethylene alkyl (meth)acrylate copolymer - component (ii)**

The ethylene alkyl (meth)acrylate copolymer of the invention is preferably an ethylene $C_1$- to $C_6$-alkyl acrylate copolymer, or ethylene $C_1$- to $C_6$-alkyl methacrylate copolymer. Still more preferably, said ethylene alkyl (meth)acrylate copolymer is a copolymer of ethylene with $C_1$- to $C_4$-alkyl acrylate, such as methyl, ethyl, propyl or butyl acrylate. The use of ethylene methyl acrylate (EMA), ethylene ethyl acrylate (EEA), or ethylene butyl acrylate (EBA) is preferred.

In one embodiment, the ethylene alkyl (meth)acrylate copolymer is an ethylene ethyl (meth)acrylate copolymer, ethylene methyl (meth)acrylate copolymer or ethylene butyl (meth)acrylate copolymer.

The alkyl (meth)acrylate content of the ethylene alkyl (meth)acrylate copolymer may range from 1.0 to 30 wt%, such as 5 to 25 wt%, more preferably 10 to 25 wt%, especially 12 to 20 wt%. These percentages are based on the content of the alkyl (meth)acrylate comonomer in the polymer as a whole.

Preferably, the ethylene alkyl (meth)acrylate copolymer has a melt flow rate $MFR_2$ (2.16kg/190°C) of 0.1 to 10 g/10 min, more preferably 0.3 to 10 g/10 min, even more preferably 1.0 to 10 g/10 min, and most preferably 2.0 to 8.0 g/10 min.

Preferably, the ethylene alkyl (meth)acrylate copolymer may have a density of 905 to 935 $kg/m^3$, such as 910 to 925 $kg/m^3$.

The amount of component (ii) in any film, film layer or blend of the invention is 1.0 to 30 wt%, such as 2.5 to 25wt%, especially 5 to 20 wt% such as 5 to 15 wt%. These percentages are based on the total weight of the film, film layer or blend of the invention.

The blend of components (i) and (ii) as defined herein form a still yet further aspect of the invention. Thus, viewed from another aspect the invention provides a blend comprising

(i) at least 70 wt% of a single site produced linear low density polyethylene (LLDPE) copolymer having an $MFR_2$ of 0.3 to 5.0 g/10min and a density of 905 to 945 kg/$m^3$; and

(ii) 1.0 to 30 wt% of an ethylene alkyl (meth)acrylate copolymer having an alkyl (meth)acrylate content of 1.0 to 30 wt% and an MFR of 0.1 to 10 g/10min.

Any preferred option for component (i) or (ii) described above also applies to this embodiment.

**Film**

The film of the invention may be a monolayer film or a multilayer film. In a multilayer film, one or more layers of that film may comprise a blend of components (i) and (ii) as herein defined. In a monolayer film, the film itself comprises the defined amounts of components (i) and (ii).

The film of the invention or a layer of a multilayer film may comprise 85 to 95 wt% of component (i) and 5 to 15 wt% of the component (ii).

Films of the invention may also comprise standard polymer additives such as antistatic agent, an antioxidant, an acid scavenger, a nucleating agent and so on. In particular phenolic stabilizers, antioxidants, slip and antistatic agents, antiblock agents processing aids, colorants and the like might be present. These typically form less than 5 wt% of the film or layer of the film, such as less than 2 wt%.

A film of the invention such as a monolayer or multilayer film, may have a Dart drop index of at least 400g, such as 400 to 700 g.

A film of the invention may have a machine direction (MD) tear resistance of at least 100 N/mm and/or a transverse direction (TD) tear resistance of at least 150 N/mm.

A film of the invention may have a thickness of 10 to 150 $\mu$m, such as 20 to 100 $\mu$m.

Films of the invention are preferably non oriented films.

Films of the invention have utility in the field of packaging. The films can be used to package food products or non-perishable products.

Multilayer films may comprise two, three or five layers, even up to seven layers. At least one layer of such films comprises components (i) and (ii) as defined herein, especially an outer sealing layer of such a film. Other layers in multilayer films can comprise other polyethylenes, e.g. HDPE, plastomers etc. It is preferred that films of the invention contain only polyethylene polymers.

Films of the invention may perform as shrink films, collation shrink films, wrap films, lamination films, etc.

The invention further relates to a process for the preparation of a film comprising (a) combining

(i) a single site produced linear low density polyethylene (LLDPE) copolymer having an $MFR_2$ of 0.3 to 5.0 g/10min and a density of 905 to 945 kg/$m^3$; and
(ii) an ethylene alkyl (meth)acrylate copolymer having an alkyl (meth)acrylate content of 1.0 to 30 wt% to form a mixture comprising at least 70 wt% of said a single site produced linear low density polyethylene (LLDPE) copolymer and 1.0 to 30 wt% of said ethylene alkyl (meth)acrylate copolymer;
(b) extruding and blowing or casting said mixture to form a film or one layer of a multilayer film.

This film manufacturing process may additionally comprise a process for the preparation of a single site produced linear low density polyethylene (LLDPE) copolymer. In one embodiment therefore, before the process defined above there is a process for the preparation of a single site linear low density polyethylene (LLDPE) copolymer comprising polymerizing ethylene and at least one C3-10 alpha-olefin comonomer in the presence of a single site catalyst.

In particular that process is a process for the preparation of a multimodal LLDPE terpolymer comprising at least two C4-10 comonomers, said process comprising:

(1) in a first step polymerizing ethylene and at least one C4-10 alpha-olefin comonomer in the presence of a single site catalyst to form a first copolymer fraction;
(2) in the presence of the first copolymer fraction and the single site catalyst polymerizing ethylene and at least one C4-10 alpha-olefin comonomer to form a second copolymer fraction wherein said first and second copolymer fractions form a first copolymer component;
(3) in the presence of the first copolymer component and the single site catalyst polymerizing ethylene and at least one C6-10 alpha-olefin comonomer to form a second copolymer component and thereby a multimodal LLDPE terpolymer having an $MFR_2$ of 0.3 to 5.0 g/10min and a density of 905 to 945 kg/$m^3$.

Preferably, the multimodal LLDPE terpolymer is a copolymer of ethylene and at least two comonomers selected

from 1-butene, 1-hexene, and 1-octene.

The first step of this process is ideally effected in the slurry phase, e.g. in a loop reactor.

The second step of this process is ideally effected in the slurry phase, e.g. in a loop reactor.

The first step of this process may be preceding by a prepolymerization step.

The third step of this process is ideally effected in the gas phase.

In a most preferred embodiment, the process of the invention may also comprise a process for the preparation of a multimodal LLDPE terpolymer comprising:

(1) in a first step polymerizing ethylene and 1-butene in the presence of a single site catalyst to form a first copolymer fraction;
(2) in the presence of the first copolymer fraction and the single site catalyst polymerizing ethylene and 1-butene to form a second copolymer fraction wherein said first and second copolymer fractions form a first copolymer component;
(3) in the presence of the first copolymer component and the single site catalyst polymerizing ethylene and 1-hexene to form a second copolymer component and thereby a multimodal LLDPE terpolymer having an $MFR_2$ of 0.3 to 5.0 g/10min and a density of 905 to 945 kg/$m^3$.

The invention will now be described with reference to the following non limiting examples.

## Examples

The following definitions of terms and determination methods apply for the above general description of the invention as well as to the below examples unless otherwise defined.

### Measuring Methods

The following definitions of terms and determination methods apply for the above general description of the invention as well as to the below examples unless otherwise defined.

### Density

Density of the polyethylene was measured according to ISO 1183-1:2004 (method A) on compression moulded specimen prepared according to EN ISO 1872-2 (Feb 2007) and is given in kg/$m^3$.

### Melt Flow Rate

The melt flow rate (MFR) is determined according to ISO 1133 and is indicated in g/10 min. The MFR is an indication of the flowability, and hence the processability, of the polymer / polyethylene for specific conditions. The higher the melt flow rate, the lower the viscosity of the polymer / polyethylene. The MFR is determined at 190 °C for polyethylene and at a loading of 2.16 kg ($MFR_2$), 5.00 kg ($MFR_5$) or 21.6 kg ($MFR_{21}$).

### Haze

Was measured according to ASTM D1003 on 40 micron films.

### Sealing initiation temperature (SIT):

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range is determined on a J&B Universal Sealing Machine Type 4000 with a film of 40 μm thickness with the following further parameters:

Specimen width: 25.4 mm
Seal Pressure: 0.1 N/$mm^2$
Seal Time: 0.1 sec

Cool time: 99 sec
Peel Speed: 10 mm/sec
Start temperature: 80 °C
End temperature: burn through
Increments: 5 °C

Hot Tack Force

The hot-tack force was determined according to ASTM F 1921-12 - Method B on a J&B Hot-Tack Tester on a 40 μm thickness film. All film test specimens were prepared in standard atmospheres for conditioning and testing at 23 °C (± 2 °C) and 50 % (± 10 %) relative humidity. The minimum conditioning time of test specimen in standard atmosphere before start testing is at least 16 h. The minimum storage time between extrusion of film sample and start testing is at least 88 h. The hot tack measurement determines the strength of heat seals formed in the films, immediately after the seal has been made and before it cools to ambient temperature. The hot-tack measurement was performed under the following conditions.

Film Specimen width: 25.4 mm.
Seal bar length: 50 mm
Seal bar width: 5 mm
Seal bar shape: flat
Seal Pressure: 0.3 $N/mm^2$.
Seal Time: 0.5sec.
Cool time: 99 sec.
Peel Speed: 200 mm/sec.
Start temperature: 50 °C.
End temperature: 140 °C.
Increments: 10 °C.

The hot tack force was measured as a function of temperature within the temperature range and with temperature increments as indicated above. The number of test specimens were at least 3 specimens per temperature. The Hot Tack force is evaluated as the highest force (maximum peak value) with failure mode "peel".

Dart drop strength (DDI)

Dart-drop is measured using ASTM D1709, method A (Alternative Testing Technique) from the film samples. A dart with a 38 mm diameter hemispherical head is dropped from a height of 0.66 m onto a film clamped over a hole. Successive sets of twenty specimens are tested. One weight is used for each set and the weight is increased (or decreased) from set to set by uniform increments. The weight resulting in failure of 50 % of the specimens is calculated and reported.

$DDI_{40}$ denominates the Dart Drop Impact determined on a 40 μm blown film.

Tensile modulus on films

Tensile moduli in machine/transverse direction were determined acc. to ISO 527-3 on films with a thickness of 40 μm at a cross head speed of 1 mm/min.

Tear resistance (determined as Elmendorf tear (N)):

Applies both for the measurement in machine direction (MD) and transverse direction (TD) on 40μm film. The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film.

Preparation Example 1 - Catalyst A

130 grams of a metallocene complex bis(1-methyl-3-n-butylcyclopentadienyl) zirconium (IV) dichloride (CAS no.

151840-68-5) and 9.67 kg of a 30% solution of commercial methylalumoxane (MAO) in toluene were combined and 3.18 kg dry purified toluene was added. Thus, obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

The LLDPE used was obtained via the following process, i.e. in a Borstar pilot plant comprising a prepolymerization step - loop - loop - gas phase reactor cascade, e.g. as described in WO2016/198273. It is a multimodal LLDPE terpolymer comprising first and second copolymer components wherein the first copolymer component comprises two fractions.

Table 1

| | PE1 |
|---|---|
| Catalyst | A |
| Prepoly reactor | |
| Temp. (°C) | 50.0 |
| Press. (kPa) | 5591.0 |
| C2 (kg/h) | 4.0 |
| C4 (g/h) | 150.0 |
| H2 (g/h) | 0.05 |
| loop reactor 1 | |
| Temp. (°C) | 85.0 |
| Press. (kPa) | 5530.6 |
| C2 conc. (mol%) | 2.5 |
| H2/C2 ratio (mol/kmol) | 0.4 |
| C4/C2 ratio (mol/kmol) | 100.8 |
| split (wt%) | 18.3 |
| Density by balance, plaque | 939.5 |
| MFR2 (g/10 min) | 7.0 |
| loop reactor 2 | |
| Temp. (°C) | 85.0 |
| Press. (kPa) | 5343.2 |
| C2 conc. (mol%) | 2.6 |
| H2/C2 ratio (mol/kmol) | 0.1 |
| C4/C2 ratio (mol/kmol) | 95.2 |
| | PE1 |
| Catalyst | A |
| Split (wt%) | 20.3 |
| Density by balance, plaque (kg/m3) | 938.9 |
| MFR2 (g/10 min) | 6.4 |
| GPR | |
| Temp. (°C) | 75.0 |
| Press. (kPa) | 2000.3 |
| H2/C2 ratio (mol/kmol) | 0.2 |
| C6/C2 ratio (mol/kmol) | 27.7 |

(continued)

| | |
|---|---|
| GPR | |
| split (wt)% | 58.2 |
| Mixer powder | |
| Density (kg/m$^3$) | 918.5 |
| $MFR_2$ (g/10 min) | 1.6 |
| Tm | 123°C |
| Hm | 99 J/g |

FT5230 is an unmodified low density polyethylene based on the tubular technology for film extrusion. It is produced by Borealis. It has $MFR_2$ of 0,75 g/10min and density of 923 kg/m$^3$

Ethylene ethyl acrylate copolymer (EEA) OE3216, has an ethyl acrylate content of 16 wt% and $MFR_2$ of 1.0 g/10min. It is commercially produced by Borealis.

The monolayer film was produced on Collin 30 blow film lab line, with 40 μm thickness and 1:2.5 BUR.

Results are shown in Table 2.

Table 2 Film properties

| | Unit | IE1 | CE1 |
|---|---|---|---|
| Blend | | 90wt% PE1+10% OE3216 | 90wt% PE1+10% FT5230 |
| 40 μm Blown Film properties | | | |
| Tensile Modulus/MD | MPa | 167 | 204 |
| Tensile Modulus/TD | MPa | 205 | 226 |
| Dart Drop Index(DDI) | g | 570 | 361 |
| Haze | % | 8 | 7 |
| Tear strength/MD | N/mm | 111,1 | 88,2 |
| Tear strength/TD | N/mm | 176,0 | 146,5 |
| Seal Initiation Temp. | °C | 90 | 94 |
| OMA(MD) | MPa*g/% | 11899 | 10521 |
| OMA (TD) | MPa*g/% | 14606 | 11655 |
| Hot Tack Force | N | 2,8 | 2,8 |
| Hot Tack Temp. | °C | 91 | 94 |

As can be seen, the IE1 has similar stiffness (TM) but much higher DDI and tear in both directions. The films have comparable haze. The optomechanical ability (OMA) is determined according the formula given below:

$$\text{OMA} = \frac{Tensile\ modulus\ x\ DDI}{Haze\ (film)}$$

The OMA is a reflection of the balance between the stiffness, impact and optical properties of an article. The IE has much higher OMA value than CE, indicating the IE has more balanced properties.

Another merit is sealing properties. The film of the invention has lower SIT and hot tack temperature while hot-tack force is the same. The Tm-SIT is higher from IE than CE, which is preferred for film applications. The processing window is broader which increase the production safety.

## Claims

**1.** A film, such as a monolayer film, comprising

(i) at least 70 wt% based on the total weight of the film of a single site produced linear low density polyethylene (LLDPE) copolymer having an $MFR_2$ (ISO 1133 at 190 °C, 2.16 kg) of 0.3 to 5.0 g/10min and a density (ISO 1183) of 905 to 945 kg/$m^3$; and
(ii) 1.0 to 30 wt% based on the total weight of the film of an ethylene alkyl (meth)acrylate copolymer having an alkyl (meth)acrylate content of 1.0 to 30 wt% based on the total weight of the ethylene alkyl (meth)acrylate copolymer.

**2.** A film as claimed in claim 1 wherein the LLDPE is obtained using a metallocene catalyst.

**3.** A film as claimed in any preceding claim wherein the ethylene alkyl (meth)acrylate copolymer is an ethylene ethyl (meth)acrylate copolymer, ethylene methyl (meth)acrylate copolymer or ethylene butyl (meth)acrylate copolymer.

**4.** A film as claimed in any preceding claim wherein the LLDPE copolymer has a density of 912 to 930 kg/$m^3$ (ISO 1183).

**5.** A film as claimed in any preceding claim wherein the LLDPE copolymer is multimodal, such as bimodal or trimodal.

**6.** A film as claimed in any preceding claim wherein the LLDPE copolymer is a multimodal LLDPE terpolymer, preferably wherein said multimodal LLDPE terpolymer comprises a lower molecular weight component (LMW) and a higher molecular weight copolymer component (HMW); wherein said LMW component comprises two fractions, a first copolymer fraction and a second copolymer fraction.

**7.** A film as claimed in any preceding claim wherein the LLDPE copolymer has a melting point of 112 to 130°C.

**8.** A film as claimed in any preceding claim comprising 85 to 95 wt% of component (i) and 5 to 15 wt% of the component (ii) based on the total weight of the film.

**9.** A film as claimed in any preceding claim having one or more of the following features:

a Dart drop index of at least 400g, such as 400 to 700 g (ASTM D1709, method A);
a machine direction (MD) tear resistance of at least 100 N/mm (ISO 6383/2);
a transverse direction (TD) tear resistance of at least 150 N/mm (ISO 6383/2).

**10.** A film as claimed in any preceding claim having a thickness of 10 to 150 $\mu$m.

**11.** A film as claimed in any preceding claim wherein the an ethylene alkyl (meth)acrylate copolymer has an $MFR_2$ of 0.1 to 10 g/10min (ISO 1133 at 190 °C, 2.16 kg); and/or
wherein the single site produced linear low density polyethylene (LLDPE) copolymer has an $MFR_2$ (ISO 1133 at 190 °C, 2.16 kg) of 0.75 to 3.0 g/10min.

**12.** A multilayer film comprising at least a layer A and a layer B wherein at least layer A comprises

(i) at least 70 wt% based on the total weight of said at least one layer of a single site produced linear low density polyethylene (LLDPE) copolymer having an $MFR_2$ of 0.3 to 5.0 g/10min (ISO 1133 at 190 °C, 2.16 kg) and a density of 905 to 945 kg/$m^3$ (ISO 1183); and
(ii) 1.0 to 30 wt%, based on the total weight of said at least one layer, of an ethylene alkyl (meth)acrylate copolymer having an alkyl (meth)acrylate content of 1.0 to 30 wt% based on the total weight of the ethylene alkyl (meth) acrylate copolymer.

**13.** A process for the production of a film comprising (a) combining

(i) a single site produced linear low density polyethylene (LLDPE) copolymer having an $MFR_2$ of 0.3 to 5.0 g/10min (ISO 1133 at 190 °C, 2.16 kg) and a density of 905 to 945 kg/$m^3$ (ISO 1183); and
(ii) an ethylene alkyl (meth)acrylate copolymer having an alkyl (meth)acrylate content of 1.0 to 30 wt% based on the total weight of the ethylene alkyl (meth)acrylate copolymer to form a mixture comprising at least 70 wt% of said a single site produced linear low density polyethylene (LLDPE) copolymer and 1.0 to 30 wt% of said ethylene alkyl (meth)acrylate copolymer;
(b) extruding and blowing or casting said mixture to form a film or one layer of a multilayer film.

**14.** A process as claimed in claim 13 wherein the LLDPE copolymer is prepared in a process in which ethylene and a

C3-10 alpha olefin comonomer are copolymerized in the presence of a single site catalyst.

**15.** A blend comprising

(i) at least 70 wt% based on the total weight of the blend of a single site produced linear low density polyethylene (LLDPE) copolymer having an $MFR_2$ of 0.3 to 5.0 g/10min (ISO 1133 at 190 °C, 2.16 kg) and a density of 905 to 945 $kg/m^3$ (ISO 1183); and
(ii) 1.0 to 30 wt% based on the total weight of the blend of an ethylene alkyl (meth)acrylate copolymer having an alkyl (meth)acrylate content of 1.0 to 30 wt% based on the total weight of the ethylene alkyl (meth)acrylate copolymer and an $MFR_2$ of 0.1 to 10 g/10min (ISO 1133 at 190 °C, 2.16 kg).

## Patentansprüche

**1.** Film, wie beispielsweise ein Einschichtfilm, umfassend

(i) mindestens 70 Gew.-% basierend auf dem Gesamtgewicht des Films eines an einem einzigen Standort produzierten Copolymers von linearem Polyethylen niedriger Dichte (LLDPE), das einen an$MFR_2$ (ISO 1133 bei 190 °C, 2,16 kg) von 0,3 bis 5,0 g/10min und einer Dichte (ISO 1183) von 905 bis 945 $kg/m^3$aufweist; und
(ii) 1,0 bis 30 Gew.-% basierend auf dem Gesamtgewicht des Films eines Ethylen-Alkyl-(Meth)acrylat-Copolymers, das einen Alkyl-(Meth)acrylat-Gehalt von 1,0 bis 30 Gew.-% basierend auf dem Gesamtgewicht des Ethylen-Alkyl-(Meth)acrylat-Copolymers aufweist.

**2.** Film nach Anspruch 1 wobei das LLDPE unter Verwendung eines Metallocen-Katalysators erhalten wird.

**3.** Film nach einem vorstehenden Anspruch, wobei das Ethylen-Alkyl-(Meth)acrylat-Copolymer ein Ethylen-Ethyl-(Meth)acrylat-Copolymer, Ethylen-Methyl-(Meth)acrylat-Copolymer oder Ethylen-Butyl-(Meth)acrylat-Copolymer ist.

**4.** Film nach einem vorstehenden Anspruch, wobei das LLDPE-Copolymer eine Dichte von 912 bis 930 $kg/m^3$ (ISO 1183) aufweist.

**5.** Film nach einem vorstehenden Anspruch, wobei das LLDPE-Copolymer multimodal ist, wie beispielsweise bimodal oder trimodal.

**6.** Film nach einem vorstehenden Anspruch, wobei das LLDPE-Copolymer ein multimodales LLDPE-Terpolymer ist, wobei das multimodale LLDPE-Terpolymer vorzugsweise eine niedrigere Molekulargewichtkomponente (LMW) und eine höhere Molekulargewicht-Copolymerkomponente (HMW) umfasst; wobei die LMW-Komponente zwei Fraktionen, eine erste Copolymer-Fraktion und eine zweite Copolymer-Fraktion, umfasst.

**7.** Film nach einem vorstehenden Anspruch, wobei das LLDPE-Copolymer einen Schmelzpunkt von 112 bis 130 °C aufweist.

**8.** Film nach einem vorstehenden Anspruch, umfassend 85 bis 95 Gew.-% der Komponente (i) und 5 bis 15 Gew.-% der Komponente (ii) basierend auf dem Gesamtgewicht des Films.

**9.** Film nach einem vorstehenden Anspruch, der eines oder mehrere der nachstehenden Merkmale aufweist:

einen Schlagfestigkeitsindex von mindestens 400g, wie beispielsweise 400 bis 700 g (ASTM D1709, Testmethode A);
eine Reißfestigkeit in Maschinenrichtung (MD) von mindestens 100 N/mm (ISO 6383/2);
eine Reißfestigkeit in Querrichtung (TD) von mindestens 150 N/mm (ISO 6383/2).

**10.** Film nach einem vorstehenden Anspruch, der eine Dicke von 10 bis 150 $\mu$m aufweist.

**11.** Film nach einem vorstehenden Anspruch, wobei das Ethylen-Alkyl-(Meth)acrylat-Copolymer einen $MFR_2$ von 0,1 bis 10 g/10min (ISO 1133 bei 190 °C, 2,16 kg) aufweist; und/oder

wobei das an einem einzigen Standort produzierte Copolymer von linearem Polyethylen niedriger Dichte (LLDPE)
einen anMFRz (ISO 1133 bei 190 °C, 2,16 kg) von 0,75 bis 3,0 g/10min aufweist.

**12.** Mehrschichtfilm, der mindestens eine Schicht A und eine Schicht B umfasst, wobei mindestens Schicht A Folgendes umfasst:

(i) mindestens 70 Gew.-% basierend auf dem Gesamtgewicht der mindestens einen Schicht eines an einem einzigen Standort produzierten Copolymers von linearem Polyethylen niedriger Dichte (LLDPE), das einen $MFR_2$ von 0,3 bis 5,0 g/10min (ISO 1133 bei 190 °C, 2,16 kg) und eine Dichte von 905 bis 945 kg/$m^3$ (ISO 1183) aufweist; und
(ii) 1,0 bis 30 Gew.-% basierend auf dem Gesamtgewicht der mindestens einen Schicht eines Ethylen-Alkyl-(Meth)acrylat-Copolymers, das einen Alkyl-(Meth)acrylat-Gehalt von 1,0 bis 30 Gew.-% basierend auf dem Gesamtgewicht des Ethylen-Alkyl-(Meth)acrylat-Copolymers aufweist.

**13.** Verfahren zur Herstellung eines Film, umfassend (a) Kombinieren

(i) eines an einem einzigen Standort produzierten Copolymers von linearem Polyethylen niedriger Dichte (LLDPE), das einen $MFR_2$ von 0,3 bis 5,0 g/10min (ISO 1133 bei 190 °C, 2,16 kg) und eine Dichte von 905 bis 945 kg/$m^3$ (ISO 1183) aufweist; und
(ii) eines Ethylen-Alkyl-(Meth)acrylat-Copolymers, das einen Alkyl-(Meth)acrylat-Gehalt von 1,0 bis 30 Gew.-% basierend auf dem Gesamtgewicht des Ethylen-Alkyl-(Meth)acrylat-Copolymers aufweist, um eine Mischung zu bilden, die mindestens 70 Gew.-% des an einem einzigen Standort produzierten Copolymers von linearem Polyethylen niedriger Dichte (LLDPE) und 1,0 bis 30 Gew.-% des Ethylen-Alkyl-(Meth)acrylat-Copolymers umfasst;

(b) Extrudieren und Blasen oder Gießen der Mischung, um einen Film oder eine Schicht eines Mehrschichtfilms zu bilden.

**14.** Verfahren nach Anspruch 13, wobei das LLDPE-Copolymer in einem Prozess zubereitet wird, in dem Ethylen und ein C3-C10-Alpha-Olefin-Comonomer in Anwesenheit eines Katalysators eines einzigen Standorts copolymerisiert werden.

**15.** Vermengung, umfassend

(i) mindestens 70 Gew.-% basierend auf dem Gesamtgewicht der Vermengung eines an einem einzigen Standort produzierten Copolymers von linearem Polyethylen niedriger Dichte (LLDPE), das einen $MFR_2$ von 0,3 bis 5,0 g/10min (ISO 1133 bei 190 °C, 2,16 kg) und eine Dichte von 905 bis 945 kg/$m^3$ (ISO 1183) aufweist; und
(ii) 1,0 bis 30 Gew.-% basierend auf dem Gesamtgewicht der Vermengung eines Ethylen-Alkyl-(Meth)acrylat-Copolymers, das einen Alkyl-(Meth)acrylat-Gehalt von 1,0 bis 30 Gew.-% basierend auf dem Gesamtgewicht des Ethylen-Alkyl-(Meth)acrylat-Copolymers und einen $MFR_2$ von 0,1 bis 10 g/10min (ISO 1133 bei 190 °C, 2,16 kg) aufweist.

## Revendications

**1.** Film, tel qu'un film monocouche, comprenant

(i) au moins 70 % en poids par rapport au poids total du film, d'un copolymère de polyéthylène basse densité linéaire produit sur un site unique (LLDPE) ayant un $MFR_2$ (ISO 1133 à 190°C, 2,16kg) allant de 0,3 à 5,0g/10min et une densité (ISO 1183) de 905 à 945kg/$m^3$ ; et
(ii) de 1,0 à 30% en poids par rapport au poids total du film, d'un copolymère d'éthylène et de (méth)acrylate d'alkyle ayant une teneur en (méth)acrylate d'alkyle comprise entre 1,0 et 30 % en poids par rapport au poids total du copolymère d'éthylène et de (méth)acrylate d'alkyle.

**2.** Film selon la revendication 1 dans lequel le LLDPE est obtenu à l'aide d'un catalyseur à base de métallocène.

**3.** Film selon l'une quelconque des revendications précédentes dans lequel le copolymère d'éthylène et de (méth)acrylate d'alkyle est un copolymère d'éthylène et de (méth)acrylate d'éthyle, un copolymère d'éthylène et de (méth) acrylate de méthyle ou un copolymère d'éthylène et de (méth)acrylate de butyle.

**4.** Film selon l'une quelconque des revendications précédentes dans lequel le copolymère LLDPE a une densité de 912 à 930 kg/$m^3$ (ISO 1183).

**5.** Film selon l'une quelconque des revendications précédentes dans lequel le copolymère LLDPE est multimodal, par exemple bimodal ou trimodal.

**6.** Film selon l'une quelconque des revendications précédentes dans lequel le copolymère LLDPE est un terpolymère LLDPE multimodal, de préférence dans lequel ledit terpolymère LLDPE multimodal comprend un composant de plus faible poids moléculaire (LMW) et un composant copolymère de plus haut poids moléculaire (HMW) ; dans lequel ledit composant LMW comprend deux fractions, une première fraction copolymère et une seconde fraction copolymère.

**7.** Film selon l'une quelconque des revendications précédentes dans lequel le copolyère LLDPE a un point de fusion de 112 à 130°C.

**8.** Film selon l'une quelconque des revendications précédentes comprenant 85 à 95% en poids de composant (i) et 5 à 15% en poids de composant (ii) sur la base du poids total du film.

**9.** Film selon l'une quelconque des revendications précédentes ayant une ou plusieurs des caractéristiques suivantes :

un indice de chute Dart d'au moins 400g, par exemple de 400 à 700g (ASTM D1709, procédé A) ;
une résistance au déchirement dans le sens machine (MD) d'au moins 100N/mm (ISO 6383/2) ;
une résistance au déchirement dans le sens transversal (TD) d'au moins 150N/mm (ISO 6383/2).

**10.** Film selon l'une quelconque des revendications précédentes ayant une épaisseur de 10 à 150 $\mu$m.

**11.** Film selon l'une quelconque des revendications précédentes dans lequel le copolymère d'éthylène et de (méth) acrylate d'alkyle a un $MFR_2$ de 0,1 à 10g/10min (ISO 1133 à 190°C, 2,16kg) ; et/ou
dans lequel le copolymère de polyéthylène basse densité linéaire produit sur un site unique (LLDPE) a un $MFR_2$ (ISO 1133 at 190°C, 2,16kg) de 0,75 à 3,0g/10min.

**12.** Film multicouche comprenant au moins une couche A et une couche B dans laquelle au moins la couche A comprend

(i) au moins 70 % en poids, par rapport au poids total de ladite au moins une couche, d'un copolymère de polyéthylène basse densité linéaire (LLDPE) produit sur un site unique ayant un $MFR_2$ allant de 0,3 à 5,0g/10 min (ISO 1133 à 190°C, 2,16kg) et une densité allant de 905 à 945kg/$m^3$ (ISO 1183) ; et
(ii) de 1,0 à 30% en poids, par rapport au poids total de ladite au moins une couche, d'un copolymère d'éthylène et de (méth)acrylate d'alkyle ayant une teneur en (méth)acrylate d'alkyle de 1,0 à 30% en poids par rapport au poids total du copolymère d'éthylène et de (méth)acrylate d'alkyle.

**13.** Procédé pour la production d'un film comprenant (a) le fait de combiner

(i) un copolymère de polyéthylène basse densité linéaire (LLDPE) produit sur un site unique ayant un $MFR_2$ allant de 0,3 à 5,0g/10min (ISO 1133 à 190°C, 2,16kg) et une densité allant de 905 à 945kg/$m^3$ (ISO 1183) ; et
(ii) un copolymère d'éthylène et de (méth)acrylate d'alkyle ayant une teneur en (méth)acrylate d'alkyle allant de 1,0 à 30% en poids par rapport au poids total du copolymère d'éthylène et de (méth)acrylate d'alkyle, pour former un mélange comprenant au moins 70% en poids dudit copolymère de polyéthylène linéaire à basse densité (LLDPE) produit sur un site unique et de 1,0 à 30% en poids dudit copolymère d'éthylène et de (méth)acrylate d'alkyle ;

(b) extruder et souffler ou couler ledit mélange pour former un film ou une couche d'un film multicouche.

**14.** Procédé selon la revendication 13 dans lequel le copolymère LLDPE est préparé dans un procédé dans lequel l'éthylène et un comonomère alpha-oléfine en C3-10 sont copolymérisés en présence d'un catalyseur à site unique.

**15.** Mélange comprenant

(i) au moins 70% en poids, par rapport au poids total du mélange, d'un copolymère de polyéthylène basse densité linéaire (LLDPE) produit sur un site unique ayant un $MFR_2$ allant de 0,3 à 5,0g/10min (ISO 1133 à 190°C, 2,16kg) et une densité allant de 905 à 945kg/$m^3$ (ISO 1183) ; et
(ii) de 1,0 à 30% en poids par rapport au poids total du mélange de copolymère d'éthylène et de (méth)acrylate d'alkyle ayant une teneur en (méth)acrylate d'alkyle allant de 1,0 à 30% en poids par rapport au poids total du copolymère d'éthylène et de (méth)acrylate d'alkyle et un $MFR_2$ allant de 0,1 à 10g/10min (ISO 1133 at 190°C, 2,16kg).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012023155 A
- WO 2001019912 A
- US 6509090 B
- US 6534173 B1
- WO 2016198273 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A


### Non-patent literature cited in the description


- *CHEMICAL ABSTRACTS*, 151840-68-5